# EUROPÄISCHE PATENTANMELDUNG

(11) **EP 4 645 009 A1**
(43) Veröffentlichungstag der Anmeldung: **05.11.2025**
(21) Anmeldenummer: 24174004.2
(22) Anmeldetag: 03.05.2024
(51) Int. Cl.: G05B 19/4099, B22F 3/105, B29C 64/386, B33Y 10/00, B33Y 50/00, G05B 19/418, B22F 10/80

(54) **VERFAHREN ZUR SPEICHERUNG VON FERTIGUNGSDATEN AUS EINEM LAGENBASIERTEN ADDITIVEN FERTIGUNGSVERFAHREN UND COMPUTERPROGRAMMPRODUKT**

(71) Anmelder: Siemens Aktiengesellschaft, 80333 München (DE)
(72) Erfinder: Reisch, Raven Thomas, 81379 München (DE); Dallmann, Michael, 90530 Wendelstein (DE)
(74) Vertreter: Siemens Patent Attorneys

(57) **Zusammenfassung**

Es wird ein Verfahren zur Speicherung von Fertigungsdaten aus einem lagenbasierten additiven Fertigungsverfahren vorgeschlagen, umfassend die Schritte:
a) Erfassung von Sensordaten während der additiven Fertigung eines Objekts,
b) Erfassung von Wegpunktdaten wenigstens eines Werkzeugpfades (1) während der additiven Fertigung;
c) Zusammenführen der Sensordaten und der Wegpunktdaten in eine gemeinsame Datenstruktur (3), wobei die Datenstruktur (3) jeweils einen Wegpunkt des Werkzeugpfades (1) mit wenigstens einem Datenpunkt aus den Sensordaten verknüpft,
d) lagenweise Strukturierung der gemeinsamen Datenstruktur (3);
e) Serialisierung der Datenstruktur (3); und
f) Speicherung der serialisierten Datenstruktur (4,5), wobei ein Dateiformat für Bewegtbilder (6) oder ein Klartext-Dateiformat (7) genutzt wird.

Weiterhin betrifft die Erfindung ein Computerprogrammprodukt, gekennzeichnet dadurch, dass das Computerprogrammprodukt zur Anzeige von gespeicherten Fertigungsdaten mittels einer Videoplayer-artigen grafischen Schnittstelle ausgebildet ist.

## Beschreibung

Die Erfindung betrifft ein Verfahren gemäß dem Oberbegriff des Patentanspruches 1 und ein Computerprogrammprodukt gemäß dem Oberbegriff des Patentanspruches 9.

Bei der additiven Herstellung von Bauteilen kann es zu Defekten kommen. Aus diesem Grund werden Prozessüberwachungssysteme eingesetzt, mit denen Prozessinstabilitäten und Bauteildefekte bereits während der Fertigung erkannt werden sollen.

Bei der schichtweisen additiven Fertigung wird für jede Schicht bei der Prozessüberwachung gegebenenfalls ein Bild aufgenommen, um die Defekte visuell zu erkennen. Prozessdaten diverser Sensoren, welche im Prozess entlang Werkzeugpfades anfallen wie z.B. Schmelzbadinformationen und Temperaturmessungen, werden räumlich und zeitlich eingeordnet. Dadurch entstehen umfangreiche Datensätze, die viel Speicherplatz erfordern. Die Darstellung für den Nutzer und ihre Auswertung ist aufgrund der großen Datenmengen und Verteilung über verschiedene Dateien herausfordernd. Insbesondere der Transfer von einem Backend zu einem Frontend erfordert bei diesen Datenmengen hohe Latenzen.

Daten aus der additiven Fertigung wurden bisher entweder im Rohformat abgespeichert und nicht weiterverwendet oder in Bilder z.B. im Bitmap-Format umgewandelt, um dadurch die Auflösung der Daten zu reduzieren. Dabei wird für jeden Sensorwert ein eigenes Bild erstellt, sodass sich redundante Informationen ergeben.

Der vorliegenden Erfindung liegt die Aufgabe zugrunde, eine Erfassung und Anzeige von Fertigungsdaten aus einem lagenbasierten additiven Fertigungsverfahren bereitzustellen.

Die Aufgabe wird durch Verfahren mit den Merkmalen des unabhängigen Patentanspruches 1 und ein Computerprogrammprodukt des unabhängigen Patentanspruches 9 gelöst. In den abhängigen Patentansprüchen sind vorteilhafte Ausgestaltungen und Weiterbildungen der Erfindung angegeben.

Das erfindungsgemäße Verfahren zur Speicherung von Fertigungsdaten aus einem lagenbasierten additiven Fertigungsverfahren, umfasst die Schritte:
a) Erfassung von Sensordaten während der additiven Fertigung eines Objekts,
b) Erfassung von Wegpunktdaten wenigstens eines Werkzeugpfades während der additiven Fertigung;
c) Zusammenführen der Sensordaten und der Wegpunktdaten in eine gemeinsame Datenstruktur, wobei die Datenstruktur jeweils einen Wegpunkt des Werkzeugpfades mit wenigstens einem Datenpunkt aus den Sensordaten verknüpft,
d) lagenweise Strukturierung der gemeinsamen Datenstruktur;
e) Serialisierung der Datenstruktur; und
f) Speicherung der serialisierten Datenstruktur, wobei ein Dateiformat für Bewegtbilder oder ein Klartext-Dateiformat genutzt wird.

Additive Fertigung umfasst insbesondere Verfahren wie das Lasterstrahl Pulverbettschmelzen, das Elektronenstrahl Pulverbettschmelzen und das Drucken von Strukturen mittels des Auftrags eines angeschmolzenen Werkstofffilaments.

Der Werkzeugpfad beschreibt eine Trajektorie oder auch Kurvenverlauf, welcher durch das Werkzeug der additiven Fertigungsmaschine während der Fertigung eines Objekts durchlaufen wird.

Die Serialisierung meint eine Abbildung von strukturierten Daten auf eine sequenzielle Darstellungsform und kann insbesondere durch Kodierungsverfahren wie Base64, Radix-64, Base32 und Base85 realisiert werden.

Dateiformate für Bewegtbilder können insbesondere GIF, APNG und TIFF sein.

Klartext-Dateiformate können insbesondere TXT, JSON, XML, YAML und SVG sein. Daten in einem Klartext-Dateiformat können mit einem einfachen Texteditor geöffnet und manuell ohne zusätzliche Vorverarbeitung gelesen und interpretiert werden.

Durch die vorliegende Erfindung wird die herkömmliche Organisation von Fertigungsdaten aus unterschiedlichen Einzeldateien vorteilhafterweise durch das Zusammenführen von Daten in eine einzige Datei ersetzt. Hierdurch kann die Analyse von Fertigungsdaten beschleunigt werden und die fehlerhafte Betrachtung von Dateien, die nicht gemeinsam betrachtet werden sollen, wird durch die Datenstruktur als gesamtheitlicher konsistenter Datensatz vermieden.

Das erfindungsgemäße Computerprogrammprodukt ist für eine Anzeige von gespeicherten Fertigungsdaten mittels einer Videoplayer-artigen grafischen Schnittstelle ausgebildet.

Ein Videoplayer als Computerprogrammprodukt kann insbesondere als eine innerhalb eines Betriebssystems installierbare Software oder als eine Web-basierte Komponente in eine Webseite ausgebildet sein. Ein Videoplayer kann hierbei aus einem Bereich zur Anzeige von Videodaten und verschiedenen Steuerelementen zur Interaktion mit den Videodaten aufgebaut sein. Steuerelemente können insbesondere Buttons für Start und Pausierung des Videos oder eine Drag-and-Drop Komponente für das Durchspulen der Videodaten sein.

Der Einsatz einer Videoplayer-artigen grafischen Schnittstelle ermöglicht vorteilhafterweise dem Nutzer eine einfachere Interaktion mit den Videodaten über Gesten wie einen Mausklick, wobei insbesondere keine Konsolenkommandos für die Steuerung mehr genutzt werden müssen.

Gemäß einer vorteilhaften Ausgestaltung kann die Serialisierung in einer TIFF-artigen Weise berechnet werden.

Das TIFF-Dateiformat ist ein Bitmap-artiges Dateiformat mit einer Anordnung von Bits, die die Farbe jedes Pixels in einer rechteckigen Anordnung von Pixeln angibt. Die Anzahl der Bits, die einem einzelnen Pixel zugeordnet sind, bestimmt die Anzahl der Farben, die diesem Pixel zugewiesen werden können.

Der Einsatz eines TIFF-artigen Dateiformats ermöglicht anstelle der Kodierung einer größeren Anzahl von Farben vorteilhafterweise die Integration von zusätzlichen Daten je Pixel, insbesondere Sensordaten können jedem Pixel einzeln zugeordnet und zusätzliche Metadaten Pixel-unabhängig hinterlegt werden.

In einer vorteilhaften Weiterbildung der Erfindung kann die Serialisierung mittels einer Base64-Kodierung berechnet werden.

Die Kodierung mit dem Base64-Verfahren ermöglicht vorteilhafterweise die Kodierung von Daten in eine Zeichenfolge, die nur aus lesbaren, ASCII-Zeichen besteht und damit von einem breiten Spektrum an Schnittstellen verarbeitet werden kann.

Gemäß einer vorteilhaften Ausgestaltung kann für die Speicherung ein TIFF-artiges, APNGartiges oder GIF-artiges Dateiformat genutzt werden.

Der Einsatz von Dateiformaten wie TIFF, APNG und GIF ermöglicht die Anzeige der Daten auf einem weiten Spektrum von Anzeigeprogrammen die meistens als Standardsoftware auf allen gängigen Betriebssystemen installiert sind.

In einer vorteilhaften Weiterbildung der Erfindung kann für die Speicherung ein videobasiertes Dateiformat genutzt werden.

Der Einsatz von Video-basierten Dateiformaten, wie insbesondere MP4 oder MJPEG ermöglicht vorteilhafterweise den Einsatz von Videokompressionstechniken zur Verkleinerung des Speicherbedarfs.

Gemäß einer vorteilhaften Ausgestaltung kann innerhalb der lagenweisen Datenstruktur dieselbe Lage jeweils in einer Originalauflösung und in einer verringerten Auflösung gespeichert werden.

Die Speicherung eines hochauflösenden und einer geringer aufgelösten Variante derselben Lage ermöglicht vorteilhafterweise die performante Anzeige von Vorschaubildern im Dateimanagement des Betriebssystems und/oder von Vorschaubildern in einem verwendeten Videoplayer.

In einer vorteilhaften Weiterbildung der Erfindung kann als Sensordaten die Temperatur für einzelne Zonen innerhalb des Werkzeugraums erfasst werden.

Die Erfassung der Temperatur für einzelne Zonen, insbesondere entlang des Werkzeugpfades ermöglicht vorteilhafterweise die Temperaturüberwachung als Teil der Qualitätssicherung des zu fertigenden Objekts.

Gemäß einer vorteilhaften Ausgestaltung kann als Sensordaten die Geschwindigkeit eines Werkzeugs- und/oder eines Schmelzstrahls entlang des Werkzeugpfades erfasst werden.

Die Erfassung der Geschwindigkeit ermöglicht vorteilhafterweise einen Soll-Ist-Abgleich der Geschwindigkeit, um eine mögliche Fehlfunktion der Fertigungsmaschine zu identifizieren.

In einer vorteilhaften Weiterbildung der Erfindung kann die grafische Schnittstelle ein Zeitstrahl-ähnliches Steuerelement aufweisen, welches zur Navigation durch die einzelnen Schmelzlagen mittels Drag-and-Drop Geste und/oder durch eine Klick-Geste an eine bestimmte Stelle auf dem Zeitstrahl-ähnlichen Steuerelement ausgebildet sein kann.

Das Zeitstrahl-ähnliche Steuerelement ermöglicht vorteilhafterweise eine schnellere Navigation durch die einzelnen Schmelzlagen, was insbesondere vorteilhaft ist, wenn wenig über das gefertigte Objekt und seine Anzahl an Schmelzlagen vorbekannt ist.

Gemäß einer vorteilhaften Ausgestaltung kann die grafische Schnittstelle, abhängig von der aktuell angezeigten Schmelzlage, für ein Buffering der Daten über die angrenzenden Schmelzlagen im Pulverbett ausgebildet sein.

Das Buffering von Daten über angrenzende Schmelzlagen ermöglicht vorteilhafterweise eine schnellere Navigation durch die verschiedenen Schmelzlagen, denn es wird eine Wartezeit bis alle Lagen komplett geladen wurden, vermieden.

In einer vorteilhaften Weiterbildung der Erfindung kann die grafische Schnittstelle für die Anzeige von Daten aus einer Base64-Zeichenkette in einer HTML-Canvas-Komponente ausgebildet sein.

Die Visualisierung mittels HTML-Canvas-Komponente, welche insbesondere Base64-kodierte Daten verarbeiten kann, erlaubt vorteilhafterweise eine breite Plattformunterstützung, insbesondere für Smartphones und Webapplikationen.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
Figur 1 die Verfahrensschritte als Ausführungsbeispiel des Verfahrens mit Temperaturdaten und Werkzeugpfaden; und
Figur 2 das Ausführungsbeispiel für die Anzeige von Fertigungsdaten mittels einer Videoplayer-artigen grafischen Schnittstelle.

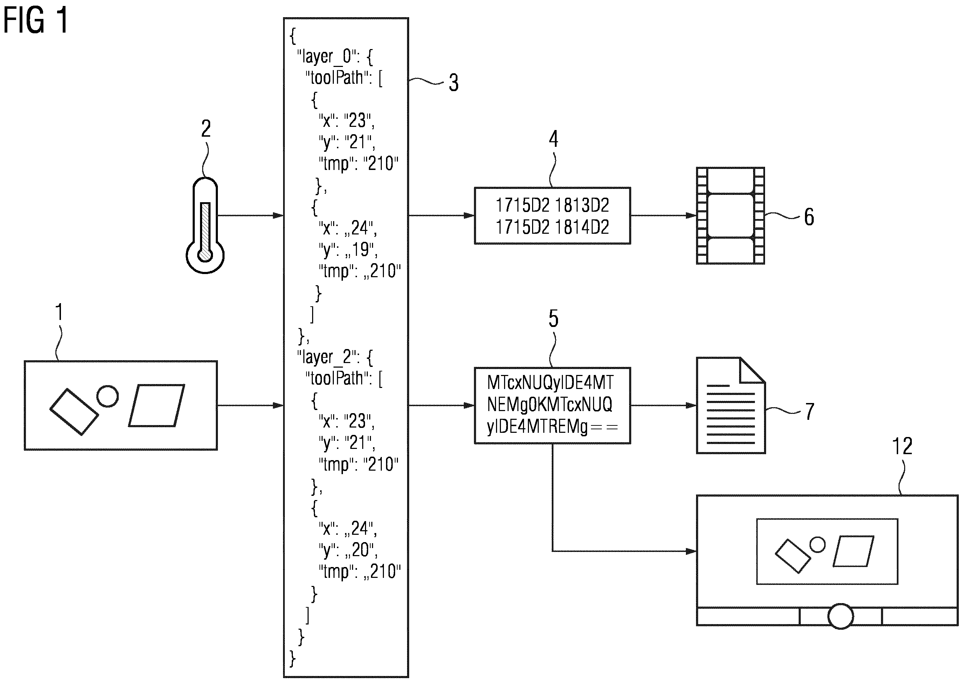

Die Figur 1 zeigt schematisch die Erzeugung einer gemeinsamen Datenstruktur 3 aus Werkzeugpfaden 1 und dazu aufgezeichneten Temperaturen 2, deren Serialisierung in einer TIFF-artigen Datenstruktur 4 oder als Base64-Zeichenkette 5 und schließlich deren Speicherung. Für den Schritt der Speicherung wird ein Klartext-Dateiformat 7 oder Dateiformat für Bewegtbilder 6 oder ein Streaming von Daten in einer Canvas-Komponente 12 vorgeschlagen.

Gemäß der vorliegenden Ausgestaltung werden die aufgezeichneten Werkzeugpfade1 und Temperaturen 2 in einer gemeinsamen Datenstruktur 3 zusammengeführt. Hierzu wurde jedem Punkt auf dem Werkzeugpfad 1 eine Temperatur 2 zugeordnet. Das Ausführungsbeispiel der Datenstruktur 3 bezieht sich auf eine JavaScript-basierte Objektnotation.

Die Datenstruktur 3 beinhaltet eine Reihe an Schmelzlagen beispielsweise bezeichnet als "layer_0" oder "layer_2". Diese Schmelzlagen beinhaltet jeweils wenigstens einen Werkzeugpfad, bezeichnet als "toolPath". Jeder Werkzeugpfad 1 beinhaltet ein Array aus Punkten, wobei jedem Punkt neben den Koordinaten auch eine Temperatur 2 zugeordnet wurde.

Eine mögliche Modifikation der Datenstruktur ergibt sich, wenn die Werkzeugpfade 11 anstelle von X/Y-Koordinaten in der Datenstruktur 3, durch eine SVG-artige Kodierung als Zeichenkette in einem Attribute übergeben werden und gleichzeitig ein weiteres Attribut auf Bildinformationen einer Fotografie verweist.

Gemäß der vorliegenden Ausgestaltung werden drei Möglichkeiten für den Schritt der Speicherung vorgeschlagen. Erstens, die Speicherung einer Base64-Zeichenkette 5 in einem Klartext-Dateiformat 7. Zweitens, die Speicherung von Daten aus einer TIFF-artigen Datenstruktur 4 in ein Dateiformat für Bewegtbilder 6. Drittens, die Übertragung der Base64-Zeichenkette 5 an eine Canvas-Komponente 12, welche insbesondere in der Markup-Sprache HTML vorgesehen ist. Eine solche Übertragung kann insbesondere durch Streaming-Protokolle wie Websocket erfolgen. Eine Speicherung erfolgt hierbei nicht als Datei im Dateisystem, sondern im flüchtigen Speicher, insbesondere einem Arbeitsspeicher eines Anzeigegeräts. Das Anzeigegerät führt hierzu die anzeigende Software aus, insbesondere einen Webbrowser.

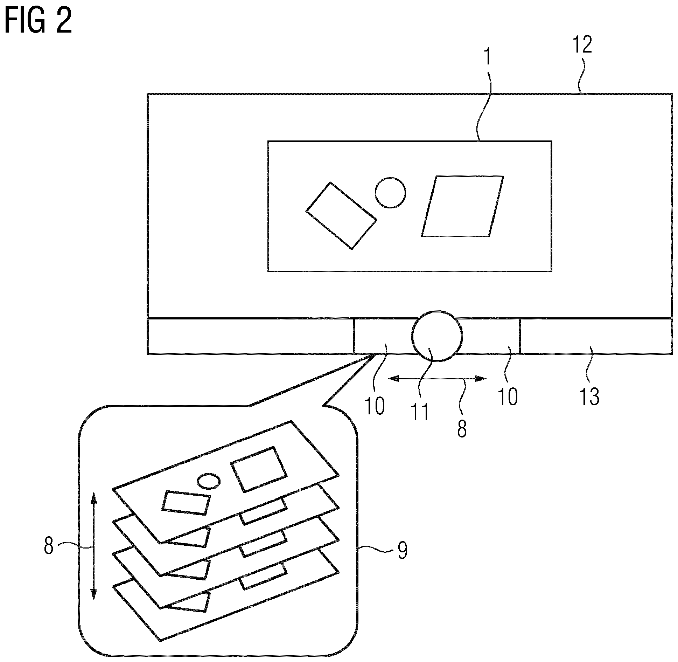

Figur 2 zeigt schematisch eine Videoplayer-artige grafische Schnittstelle als Ausführungsbeispiel, welche als wesentliche Elemente eine Canvas-Komponente 12 für die Visualisierung von Fertigungsdaten und ein Zeitstrahl-ähnliches Steuerelement 13 mit einem integrierten Steuerelement 11 welches wie ein Regler verschoben werden kann, umfasst.

Das wie ein Regler verschiebbare Steuerelement 11 kann mittels Drag-Drap-Geste auf dem Zeitstrahl-ähnlichen Steuerelement 13 platziert werden und löst mit der Platzierung die Anzeige einer korrespondierenden Schmelzlage in der Canvas-Komponente 12 und ein Buffering von Daten zu angrenzenden Schmelzlagen aus. Das erfolgreiche Buffering wird rechts und links von dem verschiebbaren Steuerelement 11 durch farbliche Hinterlegung 10 auf dem Zeitstrahl-ähnlichen Steuerelement 13 visualisiert.

Das Modellkonzept 9 verdeutlicht den Zusammenhang zwischen den Richtungen auf dem Zeitstrahl-ähnlichen Steuerelement 13 und der sequenziellen Anordnung von Schmelzlagen.

Gleichartige, gleichwertige oder gleichwirkende Elemente können in einer der Figuren oder in den Figuren mit denselben Bezugszeichen versehen sein.

### Bezugszeichenliste

- 1: Werkzeugpfad für eine Lage
- 2: Erfasste Temperatur für eine Zone
- 3: Datenstruktur mit zwei Lagen von Werkzeugpfaden und Temperaturen je Werkzeugpfad
- 4: Variante 2: Serialisierung mittels TIFF-artiger Datenstruktur
- 5: Variante 1: Serialisierung mittels Base64-Kodierung
- 6: Speicherung in einem Dateiformat für Bewegtbilder
- 7: Speicherung in einem Klartext-Dateiformat
- 8: Richtungen in die ein Buffering von Daten erfolgen kann
- 9: Konzeptionelles Modell der Navigation durch die Lagen
- 10: Visualisierung eines erfolgreichen Buffering
- 11: Steuerungselement welches wie ein Regler verschoben werden kann, um durch die Bildsequenz zu navigieren
- 12: Canvas-Komponente für die Visualisierung von Fertigungsdaten
- 13: Zeitstrahl-ähnliches Steuerelement für die Visualisierung des gesamten verfügbaren Bildsequenz

## Patentansprüche

1. Verfahren zur Speicherung von Fertigungsdaten aus einem lagenbasierten additiven Fertigungsverfahren, umfassend die Schritte:
a) Erfassung von Sensordaten während der additiven Fertigung eines Objekts,
b) Erfassung von Wegpunktdaten wenigstens eines Werkzeugpfades (1) während der additiven Fertigung;
c) Zusammenführen der Sensordaten und der Wegpunktdaten in eine gemeinsame Datenstruktur (3), wobei die Datenstruktur (3) jeweils einen Wegpunkt des Werkzeugpfades (1) mit wenigstens einem Datenpunkt aus den Sensordaten verknüpft,
d) lagenweise Strukturierung der gemeinsamen Datenstruktur (3);
e) Serialisierung der Datenstruktur (3); und
f) Speicherung der serialisierten Datenstruktur (4,5), wobei ein Dateiformat für Bewegtbilder (6) oder ein Klartext-Dateiformat (7) genutzt wird.

2. Verfahren gemäß Anspruch 1, **gekennzeichnet dadurch, dass** die Serialisierung in einer TIFF-artigen Weise berechnet wird.

3. Verfahren gemäß einem der vorherigen Ansprüche, **gekennzeichnet dadurch, dass** die Serialisierung mittels einer Base64-Kodierung (5) berechnet wird.

4. Verfahren gemäß Anspruch 1, **gekennzeichnet dadurch, dass** für die Speicherung ein TIFF-artiges oder GIF-artiges Dateiformat (6) genutzt wird.

5. Verfahren gemäß Anspruch 1, **gekennzeichnet dadurch, dass** für die Speicherung ein videobasiertes Dateiformat genutzt wird.

6. Verfahren gemäß einem der vorherigen Ansprüche, **gekennzeichnet dadurch, dass** innerhalb der lagenweisen Datenstruktur (3) dieselbe Lage jeweils in einer Originalauflösung und in einer verringerten Auflösung gespeichert wird.

7. Verfahren gemäß einem der vorherigen Ansprüche, **gekennzeichnet dadurch, dass** als Sensordaten die Temperatur (2) für einzelne Zonen innerhalb des Werkzeugraums erfasst wird.

8. Verfahren gemäß einem der vorherigen Ansprüche, **gekennzeichnet dadurch, dass** als Sensordaten die Geschwindigkeit eines Werkzeugs- und/oder eines Schmelzstrahls entlang des Werkzeugpfades erfasst wird.

9. Computerprogrammprodukt, **gekennzeichnet dadurch, dass** das Computerprogrammprodukt zur Anzeige von gespeicherten Fertigungsdaten mittels einer Videoplayer-artigen grafischen Schnittstelle ausgebildet ist.

10. Computerprogrammprodukt gemäß Anspruch 9, **gekennzeichnet dadurch, dass** die grafische Schnittstelle ein Zeitstrahl-ähnliches Steuerelement (13) aufweist, welches zur Navigation durch die einzelnen Schmelzlagen (9) mittels Drag-and-Drop Geste und/oder durch eine Klick-Geste an eine bestimmte Stelle auf dem Zeitstrahl-ähnlichen Steuerelement (13) ausgebildet ist.

11. Computerprogrammprodukt gemäß Anspruch 10, **gekennzeichnet dadurch, dass** die grafische Schnittstelle, abhängig von der aktuell angezeigten Schmelzlage, für ein Buffering (10) der Daten über die angrenzenden Schmelzlagen im Pulverbett ausgebildet ist.

12. Computerprogrammprodukt gemäß Anspruch 9 und Anspruch 3, **gekennzeichnet dadurch, dass** die grafische Schnittstelle für die Anzeige von Daten aus einer Base64-Zeichenkette (5) in einer HTML-Canvas-Komponente (12) ausgebildet ist.
